Europäisches Patentamt

European Patent Office

Office européen des brevets

(11) Veröffentlichungsnummer : **0 077 958**
**B1**

(12) **EUROPÄISCHE PATENTSCHRIFT**

(45) Veröffentlichungstag der Patentschrift :
02.01.86

(21) Anmeldenummer : **82109358.0**

(22) Anmeldetag : **09.10.82**

(51) Int. Cl.⁴ : **H 02 M 3/335**

(54) Gleichspannungswandler.

(30) Priorität : **24.10.81 DE 3142304**

(43) Veröffentlichungstag der Anmeldung :
**04.05.83 Patentblatt 83/18**

(45) Bekanntmachung des Hinweises auf die Patenterteilung : **02.01.86 Patentblatt 86/01**

(84) Benannte Vertragsstaaten :
**DE FR IT**

(56) Entgegenhaltungen :
**DE-A- 2 036 866**
**US-A- 4 095 128**
**IBM TECHNICAL DISCLOSURE BULLETIN, Band 17,
Nr. 3, August 1974, Seiten 740-741, B.J. MILANDER:
"Voltage regulation for a DC/DC converter"**

(73) Patentinhaber : **ANT Nachrichtentechnik GmbH**
**Gerberstrasse 33**
**D-7150 Backnang (DE)**

(72) Erfinder : **Geissler, Klaus Heinrich Dr. Dipl.-Phys.**
**Nansenstrasse 21/1**
**D-7150 Backnang (DE)**
Erfinder : **Hübner, Karl-Heinz, Dipl.-Ing.**
**Weilerstrasse 54**
**D-7057 Leutenbach 3 (DE)**

(74) Vertreter : **Schickle, Gerhard, Dipl.-Ing. et al**
**ANT Nachrichtentechnik GmbH Patent- und Lizenzabteilung Gerberstrasse 33**
**D-7150 Backnang (DE)**

## Beschreibung

Die Erfindung betrifft einen Gleichspannungswandler mit einem Transformator, dessen Primärwicklungen über einen ersten und zweiten elektronischen Schalter periodisch in abwechselnder Richtung an eine konstante Spannung angelegt werden und an dessen Sekundärwicklung über Gleichrichterelemente ein Verbraucher angeschlossen ist, wobei die elektronischen Schalter Einschaltimpulse einer vorwählbaren Wiederholfrequenz von einer Steuereinrichtung erhalten, die von einem Taktgeber synchronisiert ist, und wobei jeweils zwischen einem Einschaltimpuls für den ersten elektronischen Schalter und dem darauf folgenden Einschaltimpuls für den zweiten elektronischen Schalter eine Lückzeit vorgeben ist, in der beide elektronischen Schalter stromlos sind.

Aus Siemens-Zeitschrift 48 (1974), Heft 11, Seiten 840 bis 846, insbesondere Bild 2 und Bild 3 ist ein Spannungswandler nach dem Resonanzprinzip bekannt. Der dort beschriebene Gleichspannungswandler weist einen Resonanzkondensator auf, der über den gerade leitend gesteuerten ersten oder zweiten elektronischen Schalter in Serie zur Eingangsspannungsquelle und Primärwicklung des Transformators geschaltet ist. Die Wiederholfrequenz, mit der die beiden elektronischen Schalter abwechselnd eingeschaltet werden, wird gerade so groß gewählt, wie die Resonanzfrequenz des Schwingkreises, gebildet aus dem Resonanzkondensator und der Serieninduktivität des Transformators.

Bei rechteckförmiger Spannung weist dieser Gleichspannungswandler einen sinusförmigen Strom auf, dessen Nulldurchgang sich mit dem Umschaltzeitpunkt der Spannung deckt. Bei diesem Gleichspannungswandler, nach dem Prinzip der Stromresonanz, ist zwar der Wirkungsgrad hoch und die Stromspitzenbeanspruchung der elektronischen Schalter gering, aber es sind zusätzliche Bauteile erforderlich, beispielsweise der Resonanzkondensator, dessen ohmsche Verluste den Wirkungsgrad wieder reduzieren. Außerdem ist die Wiederholfrequenz der Einschaltimpulse nicht frei wählbar sondern durch den Resonanzkondensator sowie die Induktivität des Transformators bestimmt, was für zahlreiche Anwendungsfälle nicht erwünscht ist. An den Resonanzkondensator werden hohe Anforderungen bezüglich Wechselstromfestigkeit und Stabilität des Kapazitätswertes gestellt. Auch besteht bei dem angeführten Gleichspannungswandler die Gefahr der Überlastung der elektronischen Schalter durch gleichzeitiges Leiten beider Schalter bei der Polaritätsumkehr, d. h. beim Übergang vom Öffnen des ersten elektronischen Schalters zum Schließen des zweiten elektronischen Schalters.

Aufgabe der Erfindung ist es daher, einen Gleichspannungswandler eingangs genannter Art anzugeben, der bei größtmöglichem Wirkungsgrad ohne zusätzliche resonanzbestimmende Elemente auskommt, die elektronischen Schalter wenig belastet und wenig Eigenstörsignale erzeugt.

Erfindungsgemäß wird diese Aufgabe durch die kennzeichnenden Merkmale des Patentanspruchs gelöst.

Aus der US-PS 3 596 165 ist ein Gleichspannungswandler, der nach dem Prinzip der Stromresonanz arbeitet, bekannt. Für die elektronischen Schalter wird dort auch eine Lückzeit vorgegeben, in der diese stromlos sind. Jedoch wird die Lückzeit durch das instabile Verhalten eines Multivibrators bestimmt, bzw. wird je nach Höhe der Ausgangsspannung zur Regelung im Sinne einer Pulsbreitenmodulation der Einschaltimpulse der elektronischen Schalter verändert. Eine Anregung, die Lückzeit im Sinne vorliegender Erfindung zu wählen, wird in der US-PS 3 596 165 nicht gegeben. Das gilt auch für « IBM TECHNICAL DISCLOSURE BULLETIN, Bd 17, Nr. 3, August 1974 Seiten 740-741 » und US-A 4 095 128, wo eine logische Verknüpfung das gleichzeitige Leiten beider Transistoren verhindert.

Der erfindungsgemäße Gleichspannungswandler zeichnet sich dadurch aus, daß durch das selbständige Umschwingen des Systems, bestehend aus Transformator und Gleichrichterelementen mit allen Streuinduktivitäten und Streukapazitäten, der Wirkungsgrad optimal ist und keine Stromspitzen in den elektronischen Schaltern auftreten. Aufgrund der erfindungsgemäßen Lückzeit wird aus der eingangsseitigen Gleichspannung des Wandlers eine trapezförmige Wechselspannung gewonnen, die besonders oberwellen- und überschwingungsfrei ist. Demzufolge kann der sekundärseitige Filteraufwand nach der Gleichrichtung klein gehalten werden. Ein weiterer Vorteil der Trapezwelle gegenüber einer Sinuswelle ist der geringere Innenwiderstand der sekundärseitigen Gleichspannungsquelle.

Mit dem erfindungsgemäßen Gleichspannungswandler können sehr große Übersetzungsverhältnisse realisiert werden, da Streukapazitäten und Induktivitäten des Transformators nur noch eine untergeordnete Rolle spielen.

Exemplarstreuungen, wie unterschiedliche Wicklungskapazitäten, die bei der Massenfertigung von Transformatoren zwangsläufig auftreten, können beim Abgleichen des Gleichspannungswandlers — geringe Verstellung der Lückzeit — ausgeglichen werden. Ein kontrolliertes Ausräumen der sekundärseitigen Gleichrichterelemente ist mit dem erfindungsgemäßen Gleichspannungswandler auf einfache Weise möglich.

Es können sehr kleine Eingangsspannungen mit dem erfindungsgemäßen Gleichspannungswandler hochtransformiert werden, was z. B. bei der Verwendung von Solarzellen als Eingangsspannungsquelle vorteilhaft ist.

Anhand der Zeichnungen wird der erfindungsgemäße Gleichspannungswandler nun näher erläutert. Dabei zeigt

Figur 1  ein Prinzipschaltbild eines erfindungsgemäßen Gleichspannungswandlers,

Figur 2   das Schaltspiel der elektronischen Schalter,

Figur 3   den Verlauf der Spannung am Transformator,

Figur 4   ein detailliertes Schaltbild einer Anwendung des erfindungsgemäßen Gleichspannungswandlers und

Figur 5   Pulsdiagramme zu dem Gleichspannungswandler gemäß Figur 4.

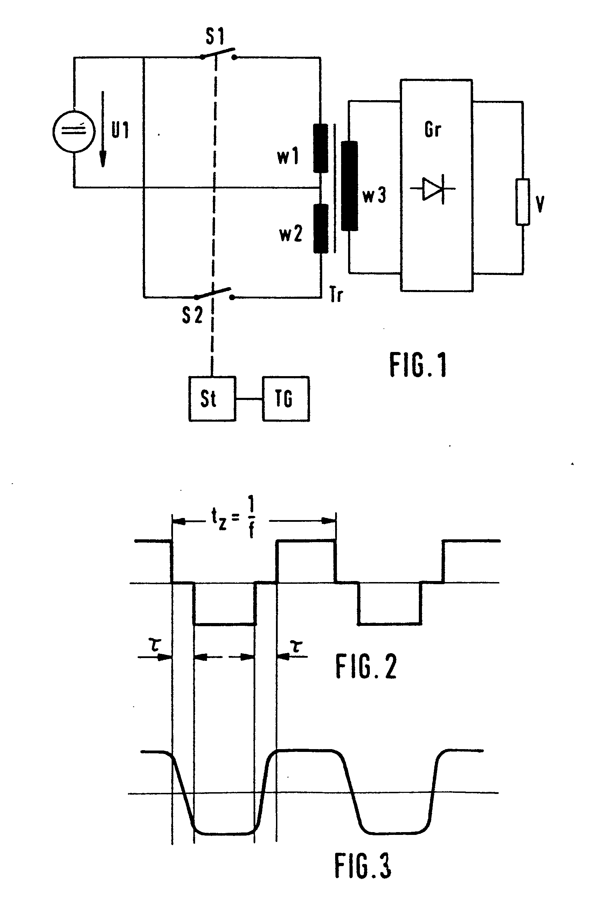

In Figur 1 werden die Primärwicklungen w1 und w2 des Transformators Tr abwechselnd periodisch an die konstante Spannung U1 angelegt. Wenn der erste elektronische Schalter S1 von der mittels des Taktgenerators TG synchronisierte Steuereinheit St seinen Einschaltimpuls erhält, wird die Spannungsquelle U1 mit der Primärwicklung w1 verbunden. Entsprechend wird im nächsten Takt die Spannung U1 durch den Schalter S2 mit der Primärwicklung w2 verbunden. Der Zerhackungsvorgang der Eingangsgleichspannung wird mit der Frequenz f durchgeführt, d. h. ein kompletter Schaltzyklus beansprucht die Zeit $t_z = 1/f$. Nennt man nun die Zeit während der der erste elektronische Schalter S1 eingeschaltet ist $t_+$ und die Zeit während der der zweite elektronische Schalter S2 eingeschaltet ist $t_-$, so müßten bei der Wahl von

$$t_+ = t_- = t_z/2$$

bei einem Polaritätswechsel, d. h. Schalter S1 öffnet und Schalter S2 schließt oder umgekehrt, die Spannungen des Transformators Tr unendlich schnell umgepolt werden.

Wegen der in den Primärstromkreis transformierten kapazitiven Anteile (Streukapazitäten, Wicklungskapazitäten, Diodenkapazitäten) würden sich sehr hohe Stromspitzen und ein schlechter Wirkungsgrad ergeben. Anstatt sich auf zufällig gegebene Transistor-Einschaltzeiten zu verlassen, wird erfindungsgemäß eine wohl definierte Lückzeit $\tau$ vorgegeben. Der Zerhackungsvorgang läuft damit so ab, daß die beiden Primärwindungen jeweils für die Zeit $t_z/2-\tau$ an der Spannung U1 anliegen. Während der Lückzeit $\tau$ sind beide elektronischen Schalter S1 und S2 geöffnet und damit stromlos.

Das Schaltspiel der elektronischen Schalter S1 und S2 ist in Figur 2 dargestellt. Zu S1 gehören die Einschaltimpulse oberhalb der Nullinie, zu S2 die Einschaltimpulse unterhalb der Nullinie.

Die Lückzeit $\tau$ wird so gewählt, daß während dieser Zeit das System, bestehend aus Transformator Tr mit allen durch das Ersatzschaltbild berücksichtigten induktiven und kapazitiven Anteile und den sekundärseitigen Gleichrichterelementen, in Gr vereinigt, von selbst mit der ihm eigenen Resonanzfrequenz auf die jeweils entgegengesetzte Polarität umschwingt. Als Gleichrichterschaltungen Gr können Vollweg-, Doppler- oder Kaskadenanordnungen angewendet werden.

Am sekundärseitigen Ausgang des Transformators Tr erhält man eine Trapezwechselspannung (vgl. Figur 3), die keine Überschwinger aufweist und deren Oberwellengehalt sehr gering ist. Durch den geringen Oberwellengehalt kann der sekundärseitige Glättungsaufwand klein gehalten werden. Nach Gleichrichtung der Trapezwechselspannung steht eine Gleichspannungsquelle mit geringem Innenwiderstand für den anzuschließenden Verbraucher V zur Verfügung.

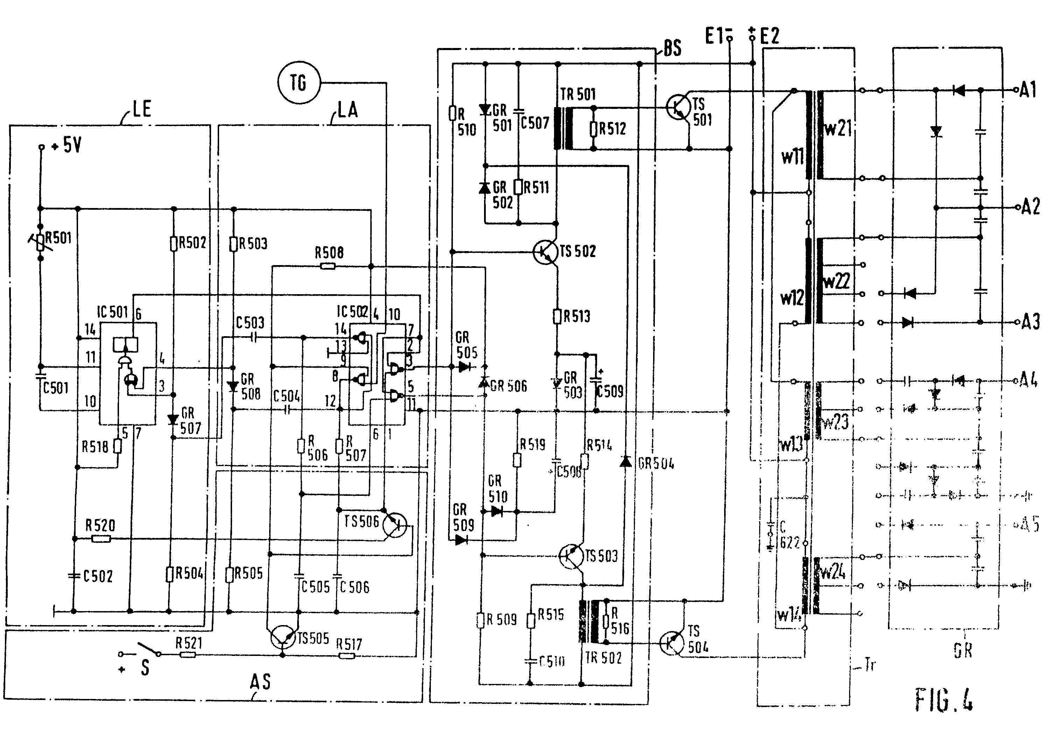

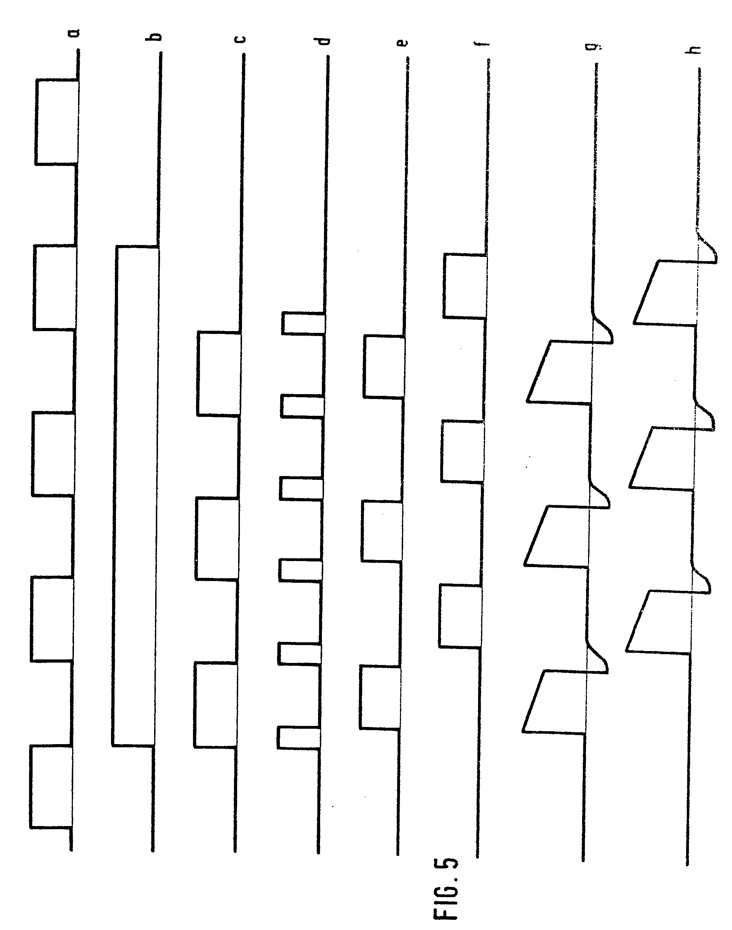

Anhand des detaillierten Schaltbildes in Figur 4 und der zugehörigen Pulsdiagramme in Figur 5 wird nun insbesondere die Funktion einer beispielhaften Steuereinheit St näher erläutert. Zur erfindungsgemäßen Lückzeit-Erzeugung sind prinzipiell zahlreiche Ausführungsbeispiele möglich.

Die Steuereinheit St der Figur 4 umfaßt einen Schaltungsblock LE zur Lückzeit-Erzeugung, einen Schaltungsblock LA zur Aufteilung des Lücksignals in positive und negative Impulse und einen Schaltungsblock AS zur Aufbereitung eines Einschaltbefehls. Die elektronischen Schalter S1 und S2 sind durch die Transistoren TS501 und TS504 repräsentiert. Angesteuert werden die Basen der Transistoren TS501 und TS504 über zwei Treiberstufen, die im Schaltungsblock BS vereinigt sind. Der Schaltungsblock BS umfaßt unter anderem zwei Treibertransistoren TS502 und TS503, die ihre Schaltbefehle über zwei NOR-Gatter IC502 des Schaltungsblocks LA erhalten, sowie zwei Treibertransformatoren TR501 und TR502. Der Transformator Tr weist mehrere Primärwicklungen w11, w12, w13 und w14, sowie mehrere Sekundärwicklungen w21, w22, w23 und w24 zur Erzeugung mehrerer voneinander unabhängiger Ausgangsspannungen auf. Im Schaltungsblock GR sind mehrere Gleichrichterelemente und Kondensatoren vorgesehen, die je nach gewünschter Ausgangsspannung des Gleichspannungswandlers mit den Anschlüssen der Sekundärwicklungen von Tr verbunden werden können. Die Eingangsgleichspannung des Wandlers wird über die Klemmen E1 und E2 zugeführt. An den Ausgangsklemmen A1, A2, A3, A4 und A5 können je nach Anwendungsfall verschieden hohe Spannungen für den angeschlossenen Verbraucher entnommen werden.

Der Schaltungsblock LA umfaßt vier NOR-Gatter (vereinigt in IC502) mit jeweils zwei Eingängen. Der Taktimpuls des Taktgenerators TG, dargestellt in Figur 5, Zeile a, steuert einen Eingang des ersten NOR-Gatters (über Pin 10). Der zweite Eingang dieses NOR-Gatters (Pin 9) wird von Transistor TS505 gesteuert. Im nicht durchgeschalteten Zustand von TS505 führt der zweite Eingang des NOR-Gatters (Pin 9) logisches H-Potential über Widerstand R508. Den Einschaltzustand des Transistors TS505 (Spannung an der Basis) gibt Figur 5, Zeile b, wieder. Ist der Schalter S geöffnet, so gelangt kein Pluspotential an die Basis von TS505, daher erscheint kein Taktimpuls von TG am Ausgang (Pin 8) des ersten NOR-Gatters (Pin 9) logisches L-Potential ; der invertierte Taktimpuls von TG, vgl. Figur 5, Zeile c, erscheint am Ausgang des ersten NOR-Gatters (Pin 8). Das im integrierten Schaltkreis IC501 enthaltene Monoflop wird nun über die Differenzierstufe, bestehend aus Kondensator C504, Widerstand R503 und Widerstand R505 getriggert. Das Monoflop liefert am Ausgang 6 von IC501 eine Pulsfolge, vgl. Figur 5, Zeile d, die der gewählten Lückzeit entspricht. Mit dem an IC501 angeschlossenen frequenzbestimmenden RC-Glied R501 und C501 des Monoflops läßt sich, beispielsweise durch Variation des Widerstandswertes von R501, die Lückzeit verändern.

Erscheint am Ausgang des ersten NOR-Gatters das invertierte Taktsignal, so wird über den Eingang 12 von IC502 das zweite NOR-Gatter aktiviert. An seinem Ausgang (Pin 14) erscheint eine Pulsfolge, welche, ebenso differenziert mittels Differenzierstufe, bestehend aus Kondensator C503, Widerstand R502 und Widerstand R504 dem Monoflop zugeführt ist. Das Monoflop wird so von der ansteigenden wie von der abfallenden Flanke des Taktimpulses getriggert. Mittels zweier weiterer NOR-Gatter wird der invertierte und der doppelinvertierte Taktimpuls mit dem Ausgangssignal des Monoflops kombiniert. Es erscheinen daher an den Ausgängen der weiteren NOR-Gatter (Pin 5 und Pin 3 von IC502) verkürzte Ansteuerimpulse. Zur Kompensation der Signallaufzeit im Monoflop sind zwei Verzögerungsglieder R506/C505 und R507/C506 in die Zuleitungen der weiteren NOR-Gatter eingefügt.

Die Ausgangssignale der weiteren NOR-Gatter an den Ausgängen von IC502 (Pin 3 und 5) vgl. Figur. 5, Zeilen e (Signal an Pin 3) und f (Signal an Pin 5) steuern die Treibertransistoren TS502 und TS503 an ihren Basen. Kollektorseitig sind TS502 und TS503 an die Treibertransformatoren TR501 und TR502 angeschlossen. Die Sekundärwicklungen der Treibertransformatoren sind an die Basen der Leistungstransistoren TS501 und TS504 angeschlossen. Die Basisströme von TS501 und TS504 sind in Figur 5, Zeilen g (TS504) und h (TS501) dargestellt.

Während der Einschaltzeiten wird ein Magnetisierungsstrom in den Treibertransformatoren aufgebaut. Die Basisströme der Transistoren TS501 und TS504 weisen daher eine Dachschräge auf.

Nach Ausschalten der Transistoren TS502 und TS503 fließen diese Ströme in umgekehrter Richtung in die Basen von TS501 bzw. TS504, daher wird der Ausschaltvorgang der Leistungstransistoren erheblich beschleunigt.

Die Dioden GR501, GR502, GR504 begrenzen die Rückschlagspannungen beider Treibertransformatoren. Die RC-Glieder C507/R511 und C510/R515 dämpfen parasitäre Schwingungen.

Der erfindungsgemäße Wandler kann natürlich auch auf verschiedenste Weise ausgebildet sein, beispielsweise als Brückenwandler mit zwei Paaren elektronischer Schalter.

**Patentanspruch**

Gleichspannungswandler mit einem Transformator (Tr), dessen Primärwicklungen (w1, w2) über einen ersten und zweiten elektronischen Schalter (S1, S2) periodisch in abwechselnder Richtung an eine konstante Spannung (U1) angelegt werden und an dessen Sekundärwicklung (w3) über Gleichrichterelemente (Gr) ein Verbraucher (V) angeschlossen ist, wobei die elektronischen Schalter (S1, S2) Einschaltimpulse einer vorwählbaren Wiederholfrequenz von einer Steuereinrichtung (St) erhalten, die von einem Taktgeber (T6) synchronisiert ist, und wobei jeweils zwischen einem Einschaltimpuls für den ersten elektronischen Schalter (S1, TS501) und dem darauf folgenden Einschaltimpuls für den zweiten elektronischen Schalter (S2, TS502) eine Lückzeit (τ) vorgeben ist, in der beide elektronischen Schalter stromlos sind, dadurch gekennzeichnet, daß die Lückzeit derart gewählt ist, daß während dieser Zeit das System, bestehend aus Transformator (Tr) plus Gleichrichterelementen von selbst mit der ihm eigenen Resonanzfrequenz auf die jeweils entgegengesetzte Polarität umschwingt.

**Claim**

Direct voltage converter with a transformer (Tr), the primary windings (w1, w2) of which are applied by way of a first and a second electronic switch (S1, S2) periodically in alternating direction to a constant voltage (U1) and to the secondary winding (w3) of which a consuming device (V) is connected through rectifier elements (Gr), wherein the electronic switches (S1, S2) receive switch-on pulses at a preselectable repetition frequency from a control equipment (St), which is synchronised by a pulse generator (TG), and wherein a gap time (τ) is predetermined, in which both electronic switches (S1, S2) are free of current each time between a switch-on pulse for the first electronic switch (S1, TS501) and the switch-on pulse following thereupon for the second electronic switch (S2, TS502), characterised thereby, that the gap time (τ) is so chosen that the system consisting of transformer (Tr) and rectifier elements on its own swings over to the respective opposite polarity during this time and at its own resonant frequency.

**Revendication**

Convertisseur de tension continue comprenant un transformateur (Tr) dont les enroulements primaires (w1, w2) sont reliés avec inversion de sens périodique à une tension constante (U1) par un premier et un second interrupteur électronique (S5, S2), et dont l'enroulement secondaire (w3) est relié par des éléments redresseurs (Gr) à un récepteur (V), les interrupteurs électroniques (S1, S2) recevant des

**0 077 958**

impulsions d'établissement à une fréquence de répétition prédéterminée, délivrées par un dispositif de commande (St) synchronisé par une horloge (TG), et un temps d'intervention (τ), pendant lequel les deux interrupteurs électroniques ne sont parcourus par aucun courant, étant imposé entre chaque impulsion d'établissement du premier interrupteur électronique (S1, TS501) et l'impulsion suivante d'établissement du second interrupteur électronique (S2, TS502), ledit convertisseur étant caractérisé en ce que le temps d'intervalle est choisi de façon que le système, constitué par le transformateur (Tr) et les éléments redresseurs, inverse spontanément sa polarité à sa fréquence de résonance propre pendant ce temps.

5

FIG.1

FIG.2

FIG.3

1

FIG. 4

FIG.5